# EUROPÄISCHE PATENTSCHRIFT

(11) **EP 3 105 086 B1**
(45) Veröffentlichungstag und Bekanntmachung des Hinweises auf die Patenterteilung: **13.05.2020**
(21) Anmeldenummer: 15713642.5
(22) Anmeldetag: 11.02.2015
(51) Int. Cl.: B60R 21/203, B60R 21/217

(54) **AIRBAGMODUL FÜR EIN KRAFTFAHRZEUGLENKRAD**
AIRBAG MODULE FOR A VEHICLE STEERINGWHEEL
MODULE D'AIRBAG POUR UN VOLANT DU VÉHICULE

(30) Priorität: 11.02.2014 DE 202014001184 U; 27.10.2014 DE 102014015772
(43) Veröffentlichungstag der Anmeldung: 21.12.2016
(73) Patentinhaber: ZF Automotive Safety Germany GmbH, 63743 Aschaffenburg (DE); WEGU GmbH Schwingungsdämpfung, 34123 Kassel (DE)
(72) Erfinder: STRANSFELD, Bernd, 63868 Grosswallstadt (DE); KRAUSE, Ralf, 34308 Bad Emstal (DE)
(74) Vertreter: ZF Patentabteilung - DIPS
(86) Internationale Anmeldenummer: PCT/EP2015/000293
(87) Internationale Veröffentlichungsnummer: WO 2015/120979

(56) Entgegenhaltungen:
- EP-A2- 1 020 332
- CN-U- 203 126 755
- DE-A1- 10 027 240
- DE-A1- 10 331 303
- DE-A1-102012 004 866

## Beschreibung

Die vorliegende Erfindung betrifft ein Airbagmodul für ein Kraftfahrzeuglenkrad, mit den Merkmalen im Oberbegriff des Anspruchs 1.

Aus dem Stand der Technik ist ein Airbagmodul für ein Kraftfahrzeuglenkrad bekannt, bei dem ein Luftsack an einem zugeordneten Halteblech befestigt ist, das wiederum an dem Kraftfahrzeuglenkrad befestigt ist. Um verschiedene Ausführungsvarianten von Airbagmodulen realisieren zu können, sind jedoch verschiedene Haltebleche erforderlich, wodurch sich insgesamt ein entsprechender Fertigungsaufwand und damit einhergehende Herstellungskosten erhöhen.

Die EP 1 020 332 A2 zeigt ein gattungsgemäßes Airbagmodul, bei dem ein Gasgenerator mittels mehrerer separater Dämpfungsglieder schwingfähig an einer Basisplatte des Airbagmoduls befestigt ist. Ferner ist ein Diffusor vorgesehen, der fest mit der Basisplatte des Airbagmoduls verbunden ist.

In der DE 103 31 303 A1 ist ein Airbagmodul offenbart, bei dem ein Gasgenerator durch separate, schwingungsdämpfend wirkende Halter mit einem Diffusor verbunden und über den Diffusor an einer Grundplatte des Modulgehäuses befestigt ist.

Eine Aufgabe der Erfindung ist es, ein neues Airbagmodul mit einer Mehrzahl von Einzelkomponenten bereit zu stellen, bei dem die Einzelkomponenten zu zumindest zwei unterschiedlich ausgestalteten Ausführungsvarianten des Airbagmoduls zusammenbaubar sind.

Diese Aufgabe wird gelöst durch ein Airbagmodul mit den Merkmalen des Anspruchs 1.

Erfindungsgemäß ist vorgesehen, dass der Gegenhalter eine Befestigungsvorrichtung aufweist, die zumindest zur Befestigung des mit einer Mehrzahl von Dämpfungsgliedern versehenen Diffusors ausgebildet ist, wobei der Gasgenerator an den Dämpfungsgliedern des an der Befestigungsvorrichtung befestigten Diffusors befestigt ist.

Erfindungsgemäß kann der Gegenhalter einstückig mit dem Diffusor ausgebildet sein.

Erfindungsgemäß ist auch vorgesehen, dass der mit dem Gegenhalter koppelbare Diffusor eine Mehrzahl von zur Befestigung des Gasgenerators ausgebildete Dämpfungsglieder aufweist.

Hierdurch ergibt sich im Vergleich zu vorbekannten Konstruktionsformen von gebräuchlichen Airbagmodulen ein vergleichsweise vereinfachter konstruktiver Aufbau, der insbesondere mit einer reduzierten Anzahl von notwendigen Einzelkomponenten auskommt. So lässt sich insbesondere eine schwingungsgedämpfte Diffusorvariante des Airbagmoduls mit einem baugleichen Gegenhalter für eine ungedämpfte, diffusorlose Variante des Airbagmoduls realisieren.

Gemäß einer Ausführungsform weist die Befestigungsvorrichtung eine Mehrzahl erster Koppeleinrichtungen, insbesondere Biegelaschen oder Rasthaken, auf, an denen der Diffusor befestigt oder befestigbar ist.

Hierdurch ergibt sich ein konstruktiv besonders einfacher Aufbau des Airbagmoduls.

Vorzugsweise weist der Gasgenerator eine Mehrzahl von zweiten Koppeleinrichtungen, insbesondere Ösen oder Rastzungen auf, die an der Mehrzahl erster Koppeleinrichtungen oder den zugeordneten Dämpfungsgliedern des an dem Gegenhalter ausgebildeten oder an der Befestigungsvorrichtung befestigten Diffusors befestigbar ist.

So sind einer Ausführungsform die ersten und zweiten Koppeleinrichtungen als in einander verrastbare Rastnasen und Rastzungen ausgebildet. Alternativ können die erste und zweite Koppeleinrichtung auch als Biegelasche und Öse zum Einfädeln der Biegelasche, Niet- oder Schraubverbindung oder andere - lösbar oder unlösbar - auf Dauerhaftigkeit ausgelegte Verbindung ausgebildet sein.

Durch die eine Mehrzahl korrespondierender Koppeleinrichtungen ist eine einfache Verbindung zwischen dem Gasgenerator und dem Gegenhalter gegeben.

Gemäß einer Ausführungsform ist vorgesehen, dass der an der Befestigungsvorrichtung befestigbare Diffusor eine Mehrzahl von zweiten Koppeleihrichtungen, insbesondere Ösen oder Rastzungen aufweist, die an der Mehrzahl erster Koppeleinrichtungen, insbesondere Biegelaschen oder Rasthaken, befestigbar ist und/ oder, dass der an dem Gegenhalter ausgebildete oder an der Befestigungsvorrichtung befestigbare Diffusor eine Mehrzahl von Dämpfungsgliedern aufweist, an der Gasgenerator mittels der Mehrzahl von zweiten Koppeleinrichtungen, insbesondere Ösen oder Rastzungen), befestigbar ist.

Durch die eine Mehrzahl zweiter Koppeleinrichtungen ist eine einfache und dauerhafte Verbindung zwischen dem Diffusor und dem Gegenhalter gegeben.

Bevorzugt ist der Gegenhalter nach Art eines Halteblechs für den Luftsack ausgebildet.

Dies ermöglicht eine großseriehtaugliche Bereitstellung eines robusten und stabilen, sowie preiswerten Luftsackhaltebleches.

Gemäß einer Ausführungsform ist der an dem Gegenhalter ausgebildete oder an der Befestigungsvorrichtung befestigte Diffusor nach Art eines Kunststoffkäfigs ausgebildet.

Auch ist bevorzugt, dass der Gegenhalter nach Art eines Halteblechs für den Luftsack ausgebildet ist, und der Diffusor nach Art eines Käfigs einstückig mit dem Gegenhalter ausgebildet ist.

Somit kann ein einfach herzustellender und insbesondere kostengünstiger Diffusor bereitgestellt werden.

Bevorzugt sind die zugeordneten Dämpfungsglieder des an dem Gegenhalter ausgebildeten oder an der Befestigungsvorrichtung befestigten Diffusors an diesen angespritzt oder vulkanisiert.

Durch das Anspritzen oder (an)vulkanisieren der Dämpfungsglieder an den Diffusor erübrigt sich ein Montageschritt bei einer entsprechenden Montage des Airbagmoduls. Alternativ können die Dämpfungsglieder auch als separate Bauteile ausgebildet sein. Die Verbindung zwischen diesen und dem Diffusor kann dann beispielsweise durch eine Formschlussverbindung erfolgen.

Gemäß einer weiteren Ausführungsform sind die zugeordneten Dämpfungsglieder des an dem Gegenhalter ausgebildeten oder an der Befestigungsvorrichtung befestigten Diffusors in zugeordneten Aufnahmen am Außenumfang des Diffusors angeordnet.

Infolge der taschenartigen Aufnahmen wird die Zentrierung des Diffusors innerhalb des Gegenhalters im Zuge der Montage des Airbagmoduls vereinfacht.

Bevorzugt ist ferner, dass die zugeordneten Dämpfungsglieder des an dem Gegenhalter ausgebildeten öder an der Befestigungsvorrichtung befestigten Diffusors ein Elastomer, insbesondere Gummi oder Silikon, aufweisen.

Hierdurch ergibt sich eine besonders effektive und zudem alterungsbeständige Dämpfungswirkung der Dämpfungsglieder.

Gemäß einer Ausführungsform sind die zugeordneten Dämpfungsglieder des an dem Gegenhalter ausgebildeten öder an der Befestigungsvorrichtung befestigten Diffusors jeweils zapfenförmig ausgebildet und weisen eine kreisförmige, eine elliptische, eine ovale oder eine mindestens dreieckige Querschnittsgeometrie mit jeweils gerundeten Kanten auf.

Durch geeignete Wahl unterschiedlicher Querschnittsgeometrien lässt sich das Dämpfungsverhalten der Dämpfungsglieder in weiten Grenzen entsprechend konstruktiven Vorgaben anpassen.

Gemäß einer Ausführungsform weisen die zugeordneten Dämpfungsglieder des an dem Gegenhalter ausgebildeten oder an der Befestigungsvorrichtung befestigten Diffusors an ihren jeweils dem Diffusor zugewandten axialen Enden einen umlaufenden, insbesondere leicht konischen, Anlageflansch auf.

Hierdurch lassen sich neben radialen Schwingungsamplituden auch in Längsrichtung der Dämpfungsglieder einwirkende Schwingungsamplituden bedämpfen.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigen:
- Fig. 1: eine perspektivische Ansicht eines Halteblechs gemäß einer Ausführungsform,
- Fig. 2: eine perspektivische Ansicht eines Kunststoffkäfigs mit vier beispielhaften Dämpfungsgliedern gemäß einer Ausführungsform,
- Fig. 3: eine perspektivische Ansicht des Halteblechs von Fig. 1 mit dem daran befestigten Kunststoffkäfig von Fig. 2,
- Fig. 4: eine perspektivische Ansicht der Anordnung von Fig. 3 mit einem daran befestigten Gasgenerator gemäß einer Ausführungsform,
- Fig. 5: eine erste Ausführungsform eines Airbagmoduls gemäß der vorliegenden Erfindung, mit der Anordnung von Fig. 4, an der ein zusammengefalteter Luftsack befestigt ist,
- Fig. 6: eine perspektivische Ansicht des Halteblechs von Fig. 1 mit dem daran befestigten Gasgenerator von Fig. 4, und
- Fig. 7: eine zweite Ausführungsform eines Airbagmoduls gemäß der vorliegenden Erfindung, mit der Anordnung von Fig. 6, an der der zusammengefaltete Luftsack von Fig. 5 befestigt ist.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche öder gleich wirkende Teile werden in den verschiedenen Figuren mit denselben Bezugszeichen bezeichnet und gewöhnlich nur einmal beschrieben.

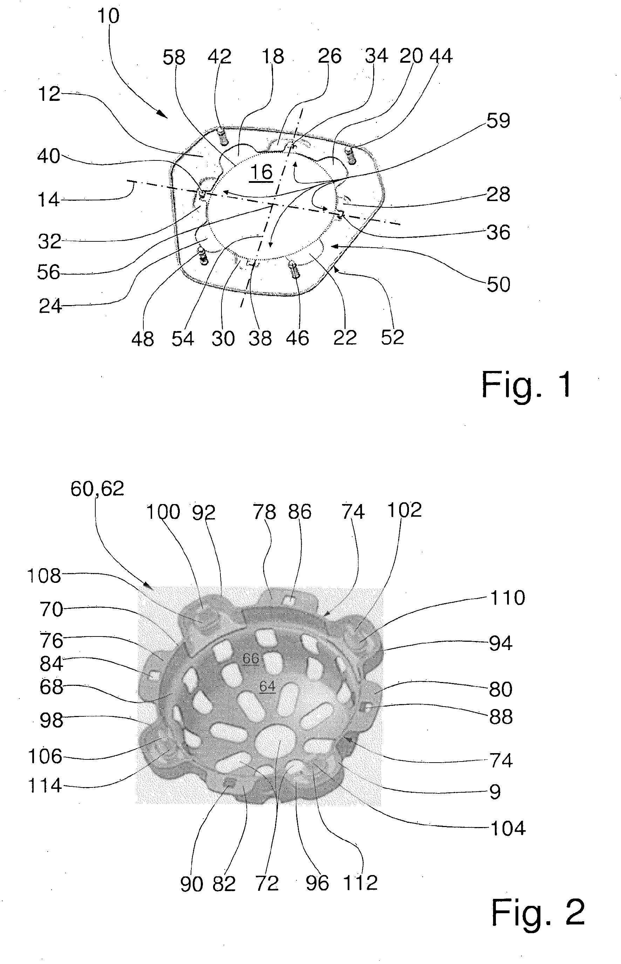

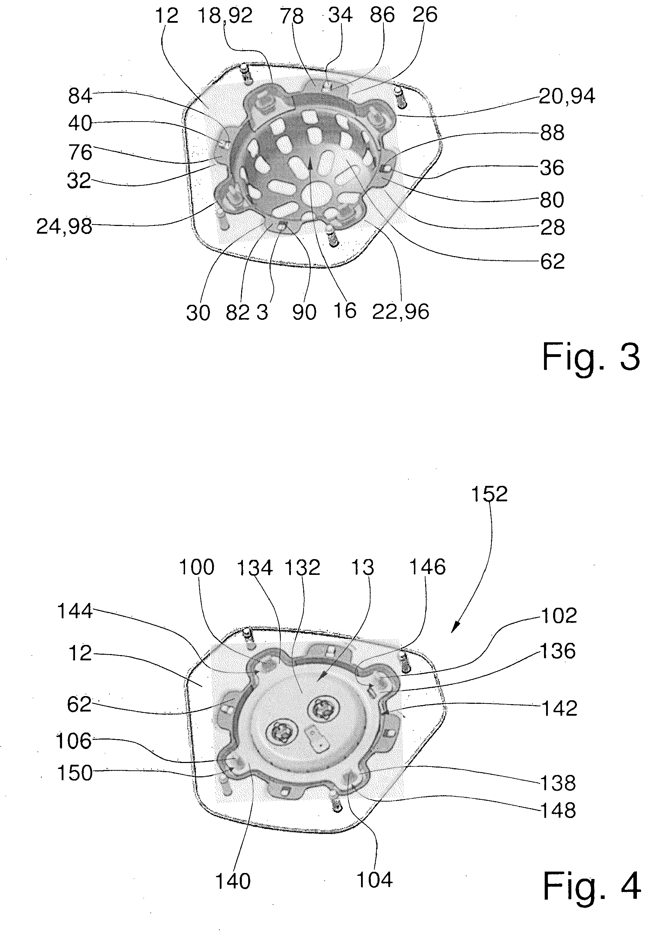

**Fig. 1** zeigt einen Gegenhalter 10 für einen Gasgenerator (130 in Fig. 4), der exemplarisch nach Art eines Halteblechs 12 ausgebildet ist. Das Halteblech 12 weist in Bezug zu einer Querachse 14 eine asymmetrische, ungefähr sechseckige Umfangskontur auf: In das Halteblech 12 ist ferner eine zentrale, in etwa kreisförmige Öffnung 16 eingelassen.

An die Öffnung 16 schließen vier, radial nach außen weisende, rechteckförmige Ausnehmungen 18 bis 24 an, die gleichmäßig zueinander beabstandet um die Öffnung 16 herum gruppiert sind. Jeweils zwischen zwei benachbarten Ausnehmungen 18 bis 24 befindet sich bevorzugt jeweils eine Vertiefung 26 bis 32 mit jeweils einer ersten Koppeleinrichtung 34 bis 40, z.B. einem Rasthaken.

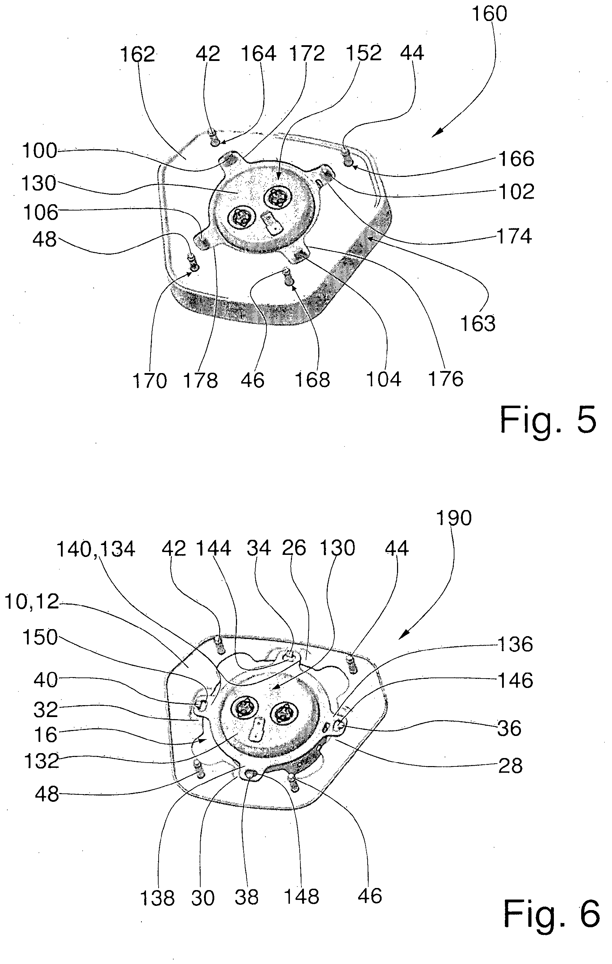

Darüber hinaus sind vier bevorzugt zumindest im Wesentlichen zylindrische Zapfen 42 bis 48 zur Lagesicherung eines Modulträger s (162 in Fig. 5) für einen Luftsack (163 in Fig. 5) vorgesehen. Die Zapfen 42 bis 48 sind bevorzugt jeweils in etwa senkrecht zu einer Oberseite 50 bzw. einer Unterseite 52 des Halteblechs 12 ausgebildet und jeweils im Bereich einer der Ausnehmungen 18 bis 24 positioniert.

Die Vertiefungen 28, 32 mit den Rasthaken 36, 40 liegen jeweils symmetrisch zu der Querachse 14, während die Vertiefungen 26, 30 mit den zugeordneten Rasthaken 34, 38 jeweils symmetrisch zu einer Längsachse 54 angeordnet sind, die ihrerseits rechtwinklig zu der Querachse 14 verläuft und diese in einem Mittelpunkt 56 einer gedachten Umfangslinie 58 der zentralen Öffnung 16 schneidet. Die Ausnehmungen 18 bis 24 sind jeweils um 90° zueinander verdreht um den Mittelpunkt 56 herum angeordnet. Dasselbe gilt für die vier Vertiefungen 26 bis 32 mit den Rasthaken 34 bis 40. Dabei sind die vier Ausnehmungen 18 bis 24 in Relation zu den vier Vertiefungen 26 bis 32 mit ihren Rasthaken 34 bis 40 um 45° verdreht um den Mittelpunkt 56 herum positioniert.

Die Vertiefungen 26 bis 32 des Halteblechs 12 bzw. des Gegenhalters 10 mit ihren vier zugeordneten Rasthaken 34 bis 40 des Halteblechs 12 bzw. des Gegenhalters 10 stellen eine Befestigungsvorrichtung 59 für einen Gasgenerator (vgl. insb. Fig. 6) oder einen Diffusor mit einem darin aufgenommenen Gasgenerator (vgl. insb. Fig. 4) dar. Eine von der Zahl "Vier" abweichende Anzahl von Ausnehmungen 18 bis 24, Vertiefungen 26 bis 32 sowie von Rasthaken 34 bis 40 und Zapfen 42 bis 48 ist gleichfalls möglich, ohne von dem erfinderischen Grundgedanken abzuweichen.

**Fig. 2** illustriert einen beispielhaften Diffusor 60, der exemplarisch nach Art eines Kunststoffkäfigs 62 ausgebildet und zur Verbindung mit dem Gegenhalter 10 bzw. dem Halteblech 12 von Fig. 1 vorgesehen ist. Der Kunststoffkäfig 62 verfügt bevorzugt über eine zumindest näherungsweise topfförmige Gestalt mit einem ungefähr kreisförmigen Boden 64, einer hohlzylindrischen Wandung 66, einer rechtwinklig zu dieser, radial nach außen weisenden, umlaufenden Schulter 68 und einem sich an der Schulter 68 wiederum senkrecht anschließenden Außenrand 70 zur Aufnahme eines zugeordneten Gasgenerators (130 in Fig. 4). In den Boden 64 sowie in die Wandung 66 ist illustrativ eine Vielzahl von rasterförmig angeordneten Öffnungen 72 zur gleichmäßigen Verteilung des vom Gasgenerator im Betrieb emittierten Gasstroms vorgesehen. Die Öffnungen 72 können eine ovale oder eine kreisrunde Form aufweisen.

An einem Außenumfang 74 des Außenrandes 70 sind hier lediglich exemplarisch vier, radial nach außen weisende Rastzungen 76 bis 82 bevorzugt angeformt bzw. einstückig damit verbünden. Die Rastzungen 76 bis 82 sind über den Außenumfang 74 des Außenrandes 70 hinweg vorzugsweise gleichmäßig zueinander beabstandet positioniert. In die Rastzungen 76 bis 82 ist jeweils eine in etwa viereckige Ausnehmung 84 bis 90 für die Rasthaken 34 bis 40 des Haltblechs 12 von Fig. 1 eingebracht.

Zwischen jeweils zwei benachbarten Rastzungen 76 bis 82 ist bevorzugt jeweils eine radial nach außen weisende, taschenförmige Aufnahme 92 bis 98 angeformt bzw. einstückig damit verbunden, In den taschenförmigen Aufnahmen 92 bis 98 ist gemäß einer Ausführungsform jeweils ein vorzugsweise zapfenförmiges Dämpfungsglied 100 bis 106 vorgesehen.

Die Dämpfungsglieder 100 bis 106 verfügen bevorzugt jeweils über einen leicht konischen Anlageflansch 108 bis 114 und dienen zur schwingungsgedämpften Aufnahme des Gasgenerators (130 in Fig. 4). Die vier Dämpfungsglieder 100 bis 106 sind vorzugsweise mit einem gut schwingungsdämpfend wirkenden Elastomer, wie z.B. mit Gummi oder mit Silikon, gebildet und bevorzugt an den Diffusor 60 bzw. den Kunststoffkäfig 62 angespritzt. Alternativ können die Dämpfungsglieder 100 bis 106 auch als separate Bauteile realisiert sein. In einer solchen Konstellation können die Dämpfungsglieder 100 bis 106 beispielsweise mit dem Kunststoffkäfig 62 verklebt, verschweißt, verschraubt, vernietet, verklemmt, verpresst, verstemmt oder auf andere Art und Weise mit diesem dauerhaft verbunden sein.

Die umfangsseitige Anordnung der Rastzungen 76 bis 82 sowie der taschenförmigen Aufnahmen 92 bis 98 des Kunststoffkäfigs 62 korrespondiert bevorzugt mit der umfangsseitigen Anordnung der Ausnehmungen 18 bis 24 sowie der Vertiefungen 26 bis 32 des Halteblechs 12 von Fig. 1, so dass sich der Kunststoffkäfig 62 unter Schaffung eines zumindest bereichsweisen Formschlusses in das Halteblech 12 einsetzen lässt. Die Rastzungen 76 bis 82 und die taschenförmigen Aufnahmen 92 bis 98 mit den Dämpfungsgliedern 100 bis 106 können jeweils in einer von der Zahl "Vier" verschiedenen Zahl vorgesehen sein.

**Fig. 3** zeigt das Halteblech 12 von Fig. 1 mit dem daran befestigten Kunststoffkäfig 62 von Fig. 2. Hierbei greifen die Rasthaken 34 bis 40 des Halteblechs 12 durch die zugeordneten Ausnehmungen 84 bis 90 der Rastzungen 76 bis 82 des Kunststoffkäfigs 62 bzw. des Diffusors 60 und sind derart radial nach außen umgebogen, dass sie an den Rastzungen 76 bis 82 des Kunststoffkäfigs 62 mit einer hinreichend hohen Druckkraft anliegen. Hierdurch ist der Kunststoffkäfig 62 dauerhaft sowie vorzugsweise zumindest weitgehend vibrationsfest innerhalb der zentralen Öffnung 16 des Halteblechs 12 festgelegt. Die Zentrierung des Kunststoffkäfigs 62 in Relation zum Halteblech 12 erfolgt durch die jeweils in den Vertiefungen 26 bis 32 liegenden Rastzungen 76 bis 82 sowie durch die in den Ausnehmungen 18 bis 24 des Halteblechs 12 aufgenommenen, taschenförmigen Aufnahmen 92 bis 98 des Kunststoffkäfigs 62.

**Fig. 4** illustriert eine perspektivische Ansicht der Anordnung von Fig. 3 mit einem in den Kunststoffkäfig 62 eingesetzten Gasgenerator 130, der bevorzugt ein zumindest näherungsweise zylindrisches Gehäuse 132 aufweist. An dem Gehäuse 132 sind hier exemplarisch vier radial nach außen gerichtete Rastzungen 134 bis 140 ausgebildet. Diese vier Rastzungen 134 bis 140 sind vorzugsweise gleichmäßig um einen Außenumfang 142 des Gehäuses 132 des Gasgenerators 130 ausgebildet und weisen bevorzugt jeweils eine Öffnung 144 bis 150 für eines der Dämpfungsglieder 100 bis 106 auf.

Die Dämpfungsglieder 100 bis 106 können beispielsweise eine kreisförmige, eine elliptische, eine ovale oder eine mindestens dreieckige Querschnittsgeometrie mit jeweils vorzugsweise gerundeten Kanten aufweisen. Die Umfangsgeometrie der Öffnungen 144 bis 150 an den Rastzungen 134 bis 140 des Gasgenerators 130 korrespondiert hierbei jeweils in etwa mit der jeweiligen Querschnittsgeometrie eines entsprechend zugeordneten Dämpfungsgliedes 100 bis 106. Das Halteblech 12 sowie der in diesem befestigte Kunststoffkäfig 62 und der Gasgenerator 130, stellen illustrativ eine (Zwischenmontage-)Anordnung 152 eines erfindungsgemäßen Airbagmoduls (160 in Fig. 5) dar.

**Fig. 5** zeigt eine erste Ausführungsform eines Airbagmoduls 160 mit der Anordnung 152 von Fig. 4, die hier illustrativ zumindest weitgehend in einem zugeordneten Modulträger 162 angeordnet ist, sodass hier lediglich der Gasgenerator 130 sichtbar ist. Dieser ist zumindest abschnittsweise in einem in dem Modulträger 162 angeordneten, zusammengefalteten Luftsack 163 angeordnet. Der Modulträger 162 verfügt bevorzugt über vier Öffnungen 164 bis 170 bzw. Bohrungen zur Durchführung der vier Zapfen 42 bis 48 des Halteblechs 12 von Fig. 1 sowie über vier in etwa viereckige Aussparungen 172 bis 178 für die vier Dämpfungsglieder 100 bis 106 des Diffusors 60 von Fig. 2.

Durch die vier Dämpfungsglieder 100 bis 106 ist eine effektive Schwingungsdämpfung zwischen dem Gasgenerator 130 und dem Halteblech 12 von Fig. 1 gegeben. Durch den Diffusor wird zudem eine gleichmäßige Verteilung des vom Gasgenerator 130 im Betrieb ausgestoßenen Gases erreicht, so dass eine gleichmäßige Entfaltung des Luftsacks 163 nach einer entsprechenden Zündung des Gasgenerators 130 gewährleistet ist.

Fig. 6 zeigt das Halteblech 12 bzw. den Gegenhalter 10 von Fig. 1 mit dem daran befestigten Gasgenerator 130 von Fig. 4. Abweichend von Fig. 4 ist der Gasgenerator 130 hier direkt in der Öffnung 16 des Halteblechs 12 befestigt und bildet mit diesem illustrativ eine (Zwischenmontage-)-Anordnung 190.

Die vier Rastzungen 34 bis 40 des Halteblechs 12 greifen hierbei illustrativ jeweils durch eine der Öffnungen 144 bis 150 der radial am Gehäuse 132 des Gasgenerators 130 vorgesehenen Rastzungen 134 bis 140 durch und sind radial nach außen umgebogen, bis sie mechanisch hinreichend fest am Halteblech 12 anliegen. Hierdurch ist eine vibrationsfeste und dauerhafte Verbindung zwischen dem Gasgenerator 130 und dem Halteblech 12 gewährleistet. Die vier Rastzungen 134 bis 140 des Gasgenerators 130 sind jeweils in den Vertiefungen 26 bis 32 des Halteblechs 12 angeordnet, d.h. die Montageposition des Gasgenerators 130 ist in Bezug zum Halteblech 12 im Vergleich zu der von Fig. 4 um ca. 45° verdreht.

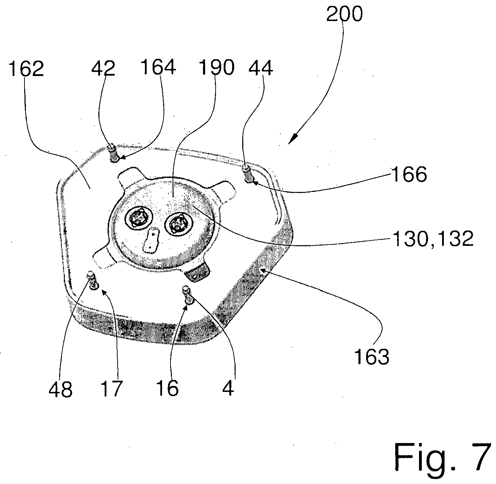

**Fig. 7** zeigt eine zweite Ausführungsform eines Airbagmoduls 200 mit der Anordnung 190 von Fig. 6, an der wiederum der zusammengefaltete Luftsack 163 von Fig. 5 mit dem Modulträger 162 von Fig. 5 befestigt ist. Hierbei ist der Modulträger 162 bevorzugt mittels seiner Öffnungen 164 bis 170 auf den Zapfen 42 bis 48 des Halteblechs 12 von Fig. 1 aufgenommen.

Aufgrund des hier im Vergleich zum Airbagmodul 160 von Fig. 5 fehlenden Kunststoffkäfigs 62 von Fig. 2 ist beim Airbagmodul 200 keine Schwingungsdämpfung zwischen dem Halteblech 12 von Fig. 1 und dem Gasgenerator 130 bzw. dem Gehäuse 132 des Gasgenerators 130 gegeben. Darüber hinaus erfolgt auch keine Vergleichmäßigung des vom Gasgenerator 130 im Fall einer Zündung in den Luftsack 163 ausgestoßenen Gasstroms.

Ein Vorteil dieser Ausführungsform ist darin zu sehen, dass ein unbeabsichtigtes Lösen der mechanischen Verbindung zwischen dem Gasgenerator 130 und den umgebogenen Koppeleinrichtungen des Halteblechs 12 aufgrund von etwaigen druckinduzierten Fließbewegungen des Materials des Kunststoffkäfigs 62 ausgeschlossen ist.

Durch die Erfindung lassen sich sowohl eine erste schwingungsgedämpfte Ausführungsform eines Airbagmoduls mit einem Diffusor sowie eine zweite ungedämpfte und diffusorlose Ausführungsform eines Airbagmoduls unter gleichzeitiger Reduzierung des Fertigungsaufwandes bereitstellen.

Naturgemäß sind im Rahmen der vorliegenden Erfindung vielfache Abwandlungen und Modifikationen möglich.

## Patentansprüche

1. Airbagmodul (160, 200) mit
einem Gasgenerator (130),
einem Diffusor (60),
einem an einem Kraftfahrzeuglenkrad befestigbaren Modulträger (162) für einen Luftsack (163) und den Gasgenerator (130) und
einem mit dem Modulträger (162) koppelbaren Gegenhalter (10),
wobei der Gegenhalter (10) eine Befestigungsvorrichtung (59) aufweist, die zumindest zur Befestigung des Diffusors (60) ausgebildet ist, und der Diffusor (60) an dem Gegenhalter (10) ausgebildet oder an der Befestigungsvorrichtung (59) befestigt ist,
wobei eine Mehrzahl von Dämpfungsgliedern (100, 102, 104, 106) vorgesehen ist und der Gasgenerator (130) an den Dämpfungsgliedern (100, 102, 104, 106) befestigt ist,
**dadurch gekennzeichnet, dass** der Diffusor (60) mit der Mehrzahl von Dämpfungsgliedern (100, 102, 104, 106) versehen ist und die Dämpfungsglieder (100, 102, 104, 106) des Diffusors (60) an diesen angespritzt oder anvulkanisiert sind.

2. Airbagmodul nach Anspruch 1, **dadurch gekennzeichnet, dass** der Gegenhalter (10) einstückig mit dem Diffusor (60) ausgebildet ist.

3. Airbagmodul nach zumindest einem der voranstehenden Ansprüche, **dadurch gekennzeichnet, dass** die Befestigungsvorrichtung (59) eine Mehrzahl von ersten Koppeleinrichtungen, insbesondere Biegelaschen oder Rasthaken, (34, 36, 38, 40) aufweist, an denen der Diffusor (60) befestigbar ist.

4. Airbagmodul nach zumindest einem der voranstehenden Ansprüche, **dadurch gekennzeichnet, dass** der Gasgenerator (130) eine Mehrzahl von zweiten Koppeleinrichtungen, insbesondere Ösen oder Rastzungen (134, 136, 138, 140) aufweist, die an den zugeordneten Dämpfungsgliedern (100, 102, 104, 106) des an dem Gegenhalter (10) ausgebildeten oder an der Befestigungsvorrichtung (59) befestigten Diffusors (60) befestigbar ist.

5. Airbagmodul nach zumindest einem der voranstehenden Ansprüche, **dadurch gekennzeichnet, dass** der an der Befestigungsvorrichtung (59) befestigbare Diffusor (60) eine Mehrzahl von zweiten Koppeleinrichtungen, insbesondere Ösen oder Rastzungen (76, 78, 80, 82) aufweist, die an der Mehrzahl erster Koppeleinrichtungen, insbesondere Biegelaschen oder Rasthaken, (34, 36, 38, 40) befestigbar ist.

6. Airbagmodul nach zumindest einem der voranstehenden Ansprüche, **dadurch gekennzeichnet, dass** der an dem Gegenhalter (10) ausgebildete oder an der Befestigungsvorrichtung (59) befestigbare Diffusor (60) eine Mehrzahl von Dämpfungsgliedern (100, 102, 104, 106) aufweist, an der der Gasgenerator (130) mittels der Mehrzahl von zweiten Koppeleinrichtungen, insbesondere Ösen oder Rastzungen (134, 136, 138, 140), befestigbar ist.

7. Airbagmodul nach zumindest einem der voranstehenden Ansprüche, **dadurch gekennzeichnet, dass** der Gegenhalter (10) nach Art eines Halteblechs (12) für den Luftsack (163) ausgebildet ist.

8. Airbagmodul nach zumindest einem der voranstehenden Ansprüche, **dadurch gekennzeichnet, dass** der an dem Gegenhalter (10) ausgebildete oder an der Befestigungsvorrichtung (59) befestigte Diffusor (60) nach Art eines Kunststoffkäfigs (62) ausgebildet ist.

9. Airbagmodul nach zumindest einem der Ansprüche 1 bis 6, **dadurch gekennzeichnet, dass** der Gegenhalter (10) nach Art eines Halteblechs (12) für den Luftsack (163) ausgebildet ist, und der Diffusor (60) nach Art eines Käfigs einstückig mit dem Gegenhalter (10) ausgebildet ist.

10. Airbagmodul nach zumindest einem der voranstehenden Ansprüche, **dadurch gekennzeichnet, dass** die zugeordneten Dämpfungsglieder (100, 102, 104, 106) des an dem Gegenhalter (10) ausgebildeten oder an der Befestigungsvorrichtung (59) befestigten Diffusors (60) in zugeordneten Aufnahmen (92, 94, 96, 98) am Außenumfang (74) des Diffusors (60) angeordnet sind.

11. Airbagmodul nach zumindest einem der voranstehenden Ansprüche, **dadurch gekennzeichnet, dass** die zugeordneten Dämpfungsglieder (100, 102, 104, 106) des an dem Gegenhalter (10) ausgebildeten oder an der Befestigungsvorrichtung (59) befestigten Diffusors (60) ein Elastomer, insbesondere Gummi oder Silikon, aufweisen.

12. Airbagmodul nach zumindest einem der voranstehenden Ansprüche, **dadurch gekennzeichnet, dass** die zugeordneten Dämpfungsglieder (100, 102, 104, 106) des an der Befestigungsvorrichtung (59) befestigten Diffusors (60) jeweils zapfenförmig ausgebildet sind und eine kreisförmige, eine elliptische, eine ovale oder eine mindestens dreieckige Querschnittsgeometrie mit jeweils gerundeten Kanten aufweisen.

13. Airbagmodul nach zumindest einem der voranstehenden Ansprüche, **dadurch gekennzeichnet, dass** die zugeordneten Dämpfungsglieder (100, 102, 104, 106) des an dem Gegenhalter (10) ausgebildeten oder an der Befestigungsvorrichtung (59) befestigten Diffusors (60) an ihren jeweils dem Diffusor (60) zugewandten axialen Enden einen umlaufenden, insbesondere leicht konischen, Anlageflansch (108, 110, 112, 114) aufweisen.

## Claims

1. An airbag module (160, 200) comprising
an inflator (130),
a diffusor (60),
a module carrier (162) for an airbag (163) and the inflator (130) mountable to a vehicle steering wheel, and
a counter support (10) adapted to be coupled to the module carrier (162),
wherein the counter support (10) includes a mounting device (59) which is configured at least for mounting the diffusor (60), and the diffusor (60) is configured on the counter support (10) or is mounted on the mounting device (59),
wherein a plurality of damping members (100, 102, 104, 106) is provided and the inflator (130) is mounted on the damping members (100, 102, 104, 106),
**characterized in that** the diffusor (60) is provided with the plurality of damping members (100, 102, 104, 106) and the damping members (100, 102, 104, 106) of the diffusor (60) are injection-molded or vulcanized to the latter.

2. The airbag module according to claim 1, **characterized in that** the counter support (10) is formed integrally with the diffusor (60).

3. The airbag module according to at least one of the preceding claims, **characterized in that** the mounting device (59) includes a plurality of first coupling units, especially bending tabs or detent hooks, (34, 36, 38, 40) to which the diffusor (60) can be mounted.

4. The airbag module according to at least one of the preceding claims, **characterized in that** the inflator (130) includes a plurality of second coupling units, especially eyes or detent tongues (134, 136, 138, 140) which can be mounted to the associated damping members (100, 102, 104, 106) of the diffusor (60) configured on the counter support (10) or mounted on the mounting device (50).

5. The airbag module according to at least one of the preceding claims, **characterized in that** the diffusor (60) mountable to the mounting device (59) includes a plurality of second coupling units, especially eyes or detent tongues (76, 78, 80, 82), which can be mounted to the plurality of first coupling units, especially bending tabs or detent hooks, (34, 36, 38, 40).

6. The airbag module according to at least one of the preceding claims, **characterized in that** the diffusor (60) configured on the counter support (10) or mountable to the mounting device (59) includes a plurality of damping members (100, 102, 104, 106) to which the inflator (130) can be mounted by means of the plurality of second coupling units, especially eyes or detent tongues (134, 136, 138, 140).

7. The airbag module according to at least one of the preceding claims, **characterized in that** the counter support (10) is in the form of a retaining plate (12) for the airbag (163).

8. The airbag module according to at least one of the preceding claims, **characterized in that** the diffusor (60) configured on the counter support (10) or mounted on the mounting device (59) is in the form of a plastic cage (62).

9. The airbag module according to at least one of the claims 1 to 6, **characterized in that** the counter support (10) is in the form of a retaining plate (12) for the airbag (163), and the diffusor (60) is formed integrally with the counter support (10) in the form of a cage.

10. The airbag module according to at least one of the preceding claims, **characterized in that** the associated damping members (100, 102, 104, 106) of the diffusor (60) configured on the counter support (10) or mounted on the mounting device (59) are arranged in associated seats (92, 94, 96, 98) at the outer periphery (74) of the diffusor (60).

11. The airbag module according to at least one of the preceding claims, **characterized in that** the associated damping members (100, 102, 104, 106) of the diffusor (60) configured on the counter support (10) or mounted on the mounting device (59) comprise an elastomer, especially rubber or silicone.

12. The airbag module according to at least one of the preceding claims, **characterized in that** each of the associated damping members (100, 102, 104, 106) of the diffusor (60) mounted on the mounting device (59) is pin-shaped and has a circular, elliptic, oval or at least triangular cross-sectional geometry including respective rounded edges.

13. The airbag module according to at least one of the preceding claims, **characterized in that** the associated damping members (100, 102, 104, 106) of the diffusor (60) configured on the counter support (10) or mounted on the mounting device (59) have a circumferential, especially slightly conical, contact flange (108, 110, 112, 114) at their axial ends each facing the diffusor (60).

## Revendications

1. Module airbag (160, 200) avec un générateur de gaz (130),
un diffuseur (60),
un support de module (162) pour un coussin gonflable (163), module pouvant être fixé sur un volant de véhicule automobile et le générateur de gaz (130) et un contre-support (10) qui peut être couplé avec le support de module (162),
pour lequel le contre-support (10) présente un dispositif de fixation (59), lequel est conçu au moins pour fixer le diffuseur (60), et le diffuseur (60) est formé sur le contre-support (10) ou est fixé au dispositif de fixation (59),
pour lequel une pluralité d'éléments amortisseurs (100, 102, 104, 106) est prévue et le générateur de gaz (130) est fixé sur les éléments amortisseurs (100 , 102, 104, 106),
**caractérisé en ce que** le diffuseur (60) est pourvu de la pluralité de 15 éléments amortisseurs (100, 102, 104, 106) et les éléments amortisseurs (100, 102, 104, 106) du diffuseur (60) sont injectés ou vulcanisés sur ce dernier.

2. Module airbag selon la revendication 1, **caractérisé en ce que** le contre-support (10) est formé d'une seule pièce avec le diffuseur (60).

3. Module airbag selon au moins l'une des revendications précédentes, **caractérisé en ce que** le dispositif de fixation (59) comporte une pluralité d'une première série dz dispositifs de couplage, notamment des pattes de fixation ou des crochets de verrouillage (34, 36, 38, 40), auxquels le diffuseur (60) peut être fixé

4. Module airbag selon au moins l'une des revendications précédentes, **caractérisé en ce que** le générateur de gaz (130) comporte une pluralité d'une seconde série de dispositifs de couplage, en particulier des œillets ou des languettes de verrouillage (134, 136, 138, 140), laquelle est fixée aux éléments amortisseurs associés (100, 102, 104, 106) qui sont formés sur le contre-support (10) ou peut être fixée sur le diffuseur (60) solidaire du dispositif de fixation (59).

5. Module airbag selon au moins l'une des revendications précédentes, **caractérisé en ce que** le diffuseur (60) qui peut être fixé au dispositif de fixation (59) comporte une pluralité d'une seconde série de dispositifs de couplage, notamment des œillets ou languettes de verrouillage (76, 78, 80, 82) qui peut être fixée sur la pluralité d'une première série de dispositifs de couplage, notamment des pattes de fixation ou des crochets de verrouillage (34, 36, 38, 40).

6. Module airbag selon au moins l'une des revendications précédentes, **caractérisé en ce que** le diffuseur (60) formé sur le contre-support (10) ou pouvant être fixé au dispositif de fixation (59) comporte une pluralité de 10 éléments amortisseurs (100, 102, 104, 106), auquel le générateur de gaz (130) peut être fixé au moyen de la pluralité de la seconde série de dispositifs de couplage, notamment des œillets ou des languettes de verrouillage (134, 136, 138, 140).

7. Module airbag selon au moins l'une des revendications précédentes, **caractérisé en ce que** le contre-support (10) est conçu comme une plaque de maintien 15 (12) pour le coussin gonflable (163).

8. Module airbag selon au moins l'une des revendications précédentes, **caractérisé en ce que** le diffuseur (60) formé sur le contre-support (10) ou fixé au dispositif de fixation (59) est conçu comme une cage en plastique (62).

9. Module airbag selon au moins l'une des revendications 1 à 6, **caractérisé en ce que** le contre-support (10) est conçu comme une plaque de maintien (12) pour le coussin gonflable (163), et le diffuseur (60) est réalisé comme une cage en une seule pièce avec le contre-support (10).

10. Module d'airbag selon au moins l'une des revendications précédentes, **caractérisé en ce que** les éléments amortisseurs associés (100, 102, 104, 106) sont formés sur le contre-support (10) ou sont disposés sur le diffuseur (60) solidaire du dispositif de fixation (59) dans des réceptacles associés (92, 94, 96, 98) sur la circonférence extérieure (74) du diffuseur (60).

11. Module airbag selon au moins l'une des revendications précédentes, **caractérisé en ce que** les éléments amortisseurs associés (100, 102, 104, 106) formés sur le contre-support (10) ou fixés au diffuseur (60) solidaire du dispositif de fixation (59) présentent un élastomère, en particulier du caoutchouc ou du silicone.

12. Module airbag selon au moins l'une des revendications précédentes, **caractérisé en ce que** les éléments amortisseurs associés (100, 102, 104, 106) fixés au diffuseur (60) solidaire du dispositif de fixation (59) sont chacun en forme de cône et d'une forme circulaire, elliptique, une géométrie transversale ovale ou au moins triangulaire, chacune avec des bords arrondis.

13. Module airbag selon au moins l'une des revendications précédentes, **caractérisé en ce que** les éléments amortisseurs associés (100, 102, 104, 106) formés sur le contre-support (10) ou fixés sur le diffuseur (60) solidaire du dispositif de fixation (59) présentent à chaque extrémité axiale respectivement tournée vers le diffuseur (60) une bride de contact (108, 110, 112, 114) périphérique, notamment légèrement conique.
